# EUROPÄISCHE PATENTSCHRIFT

(11) **EP 2 141 399 B1**
(45) Veröffentlichungstag und Bekanntmachung des Hinweises auf die Patenterteilung: **22.12.2010**
(21) Anmeldenummer: 09162962.6
(22) Anmeldetag: 17.06.2009
(51) Int. Cl.: F16L 3/137, F16L 3/233, B25D 5/02, F16B 9/00, F16B 15/00, H02G 3/30

(54) **Konstruktions-Hilfselement**
Fixing element
Elément d'aide à la fixation

(30) Priorität: 03.07.2008 DE 102008040121
(43) Veröffentlichungstag der Anmeldung: 06.01.2010
(73) Patentinhaber: HILTI Aktiengesellschaft, 9494 Schaan (LI)
(72) Erfinder: Miescher, Stefan, 9494 Schaan (LI); Fielitz, Harald, 9470 Buchs (CH); Odoni, Walter, 9498 Planken (LI); Schiestl, Ulrich, 6800 Feldkirch (AT)

(56) Entgegenhaltungen:
- EP-A- 0 855 467
- US-A- 2 961 210
- US-A- 3 913 876
- US-A- 4 655 423

## Beschreibung

Die vorliegende Erfindung betrifft ein Konstruktions-Hilfselement der im Oberbegriff des Patentanspruchs 1 genannten Art.

Derartige Konstruktions-Hilfselemente sind z. B. als Schalungsanschläge, Kabelbefestiger, Rohrhalter, Rohrschellen oder Winkelelemente ausgebildet die über mit Setzgeräten eintreibbaren Befestigungselementen, wie Nägeln, Stiften oder etc., an einem Bauteil bzw. an einem Werkstück festlegbar sind. Die Konstruktions-Hilfselemente weisen dabei zum Teil einen Halteabschnitt auf, über den sie an der Mündung des Laufes eines Setzgerätes ansteckbar sind.

Aus der US 2 961 210 ist ein als Rohrklemme ausgebildetes Konstruktions-Hilfselement bekannt, das einen hülsenförmigen Führungsabschnitt mit Widerlager für ein als Nagel ausgebildetes Befestigungselement aufweist. Der hülsenförmige Führungsabschnitt überragt dabei eine Basis des Konstruktions-Hilfselements und ist benachbart zu einem gebogenen Haltebügel für ein Rohr angeordnet. Der hülsenförmige Führungsabschnitt kann vor einem Setzvorgang in die Öffnung der Mündung eines Setzgerätes eingesteckt werden.

Von Nachteil hierbei ist, dass nach dem Aufstecken eines derartigen Konstruktions-Hilfselements auf die Mündung eines Setzgerätes ein Anpressmechanismus zur Auslösefreigabe des Setzgerätes leicht durch ein manuelles Andrücken des Konstruktions-Hilfselements gegen das Gerätegehäuse simuliert und damit das Setzgerät leicht manipulierbar ist.

Aus der EP 0 855 467 B1 ist ein als Gitterhalter ausgebildetes Konstruktions-Hilfselement bekannt, das eine Basis zum Abstützen an einem Bauteil oder Werkstück aufweist. Von der Basis ragt ein kegelstumpfförmiger Führungsabschnitt mit Widerlager für ein Befestigungselement, wie einen Nagel, ab. Seitlich an der Basis angeordnet ist noch ein Gitterhalteabschnitt.

Auch hierbei ist es von Nachteil, dass nach dem Aufstecken eines derartigen Konstruktions-Hilfselements auf die Mündung eines Setzgerätes der Anpressmechanismus zur Auslösefreigabe des Setzgerätes leicht durch ein manuelles Andrücken des Konstruktions-Hilfselements gegen das Gerätegehäuse simuliert und damit das Setzgerät leicht manipulierbar ist.

Die Aufgabe der vorliegenden Erfindung liegt darin, Konstruktions-Hilfselemente der oben genannten Art bereitzustellen, die eine Detektion der Anlage an ein Bauteil oder Werkstück ermöglichen. Diese Aufgabe wird erfindungsgemäss durch die in Anspruch 1 genannten Massnahmen gelöst.

Demnach ist am Basisteil ein im Führungsabschnitt versetzbar geführtes geführtes Tastelement vorgesehen, das wenigstens eine von der Durchtrittsöffnung radial beabstandete und entlang der Befestigungsachse versetzbare Stellfläche für einen Anpressfühler eines Setzgerätes aufweist, wobei das Tastelement im Ausgangszustand über die dem Führungsabschnitt abgewandte Seite des Basisteils vorsteht. Über das am Basisteil vorhandene versetzbar bzw. verschieblich geführte Tastelement wird es möglich, das Ansetzen des Basisteils an einem Bauteil oder Werkstück zu detektieren und über das Tastelement an einen Anpressfühler eines Setzgerätes weiterzuleiten.

Vorteilhaft ist das Tastelement als länglicher Stift ausgebildet ist, der radial beabstandet zum Führungsabschnitt in einer separaten Führung angeordnet ist und an dessen einem Stiftende die Stellfläche angeordnet ist, was technisch wenig aufwändig ist und nur geringe Zusatzkosten verursacht.

Von Vorteil ist es ferner, wenn das Tastelement unverlierbar in der Führung gehalten ist. Das Tastelement könnte hierzu z. B. an beiden Enden verdickt sein, und dort so einen Querschnitt aufweisen, der grösser ist als der Innenquerschnitt der Führung.

Vorteilhaft könnte das Tastelement auch als länglicher Hohlstift ausgebildet sein, der einen Aufnahmeraum für das Befestigungselement aufweist, wobei die Führung für das Tastelement koaxial zu der Befestigungsachse angeordnet ist. Hierdurch fällt die Führung mit der Durchtrittsöffnung für das Befestigungselement zusammen und es muss keine separate Führung am Basisteil mehr vorgesehen werden. Ausserdem wird eine gleichmässige weil axial symmetrische Übertragung der Anpresskraft ermöglicht.

Günstig ist es auch, wenn an dem Tastelement wenigstens ein seitlich abragender Vorsprung angeordnet ist, an dem die Stellfläche angeordnet ist, so dass die Stellfläche auch bei Anordnung des Tastelements koaxial zur Befestigungsachse noch radial versetzt zu dieser bzw. zur Durchtrittsöffnung angeordnet ist und den Anpressfühler des Setzgerätes zu betätigen vermag.

Vorteilhaft sind mehrere Vorsprünge in regelmässigen Abständen seitlich abragend am Tastelement angeordnet, so dass eine sichere Betätigung des Anpressfühlers eines Setzgerätes auch bei einem leicht schrägen Aufsetzen des Konstruktions-Hilfselements an dem Mündungsteil des Setzgerätes noch möglich ist.

In den Zeichnungen ist die Erfindung in mehreren Ausführungsbeispielen dargestellt.

Es zeigen:
- Fig. 1: ein, als Kabelbefestiger ausgebildetes erfindungsgemässes Konstruktions- Hilfselementes in perspektivischer Ansicht,
- Fig. 2: das Konstruktions-Hilfselement aus Fig. 1 in Aufsicht,
- Fig. 3: das Konstruktions-Hilfselement aus Fig. 1 an einer Mündung eines Setzgerätes in Schnittansicht,
- Fig. 4: das Konstruktions-Hilfselement aus Fig. 1 an der Mündung des Setzgerätes in Schnittansicht, in einer an ein Werkstück angesetzten Stellung,
- Fig. 5: ein weiteres als Kabelbefestiger ausgebildetes erfindungsgemässes Konstruktions- Hilfselement an einer Mündung eines Setzgerätes in Schnittansicht,
- Fig. 6: das Konstruktions-Hilfselement aus Fig. 5 an der Mündung des Setzgerätes in Schnittansicht, in einer an ein Werkstück angesetzten Stellung.

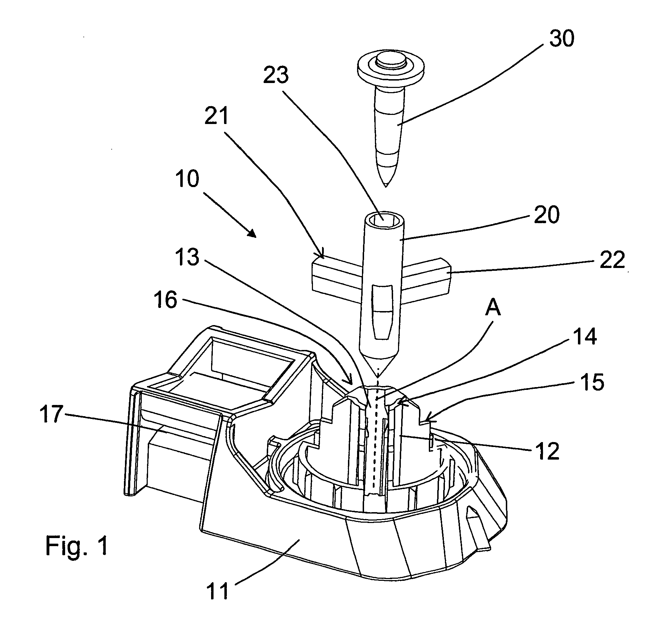

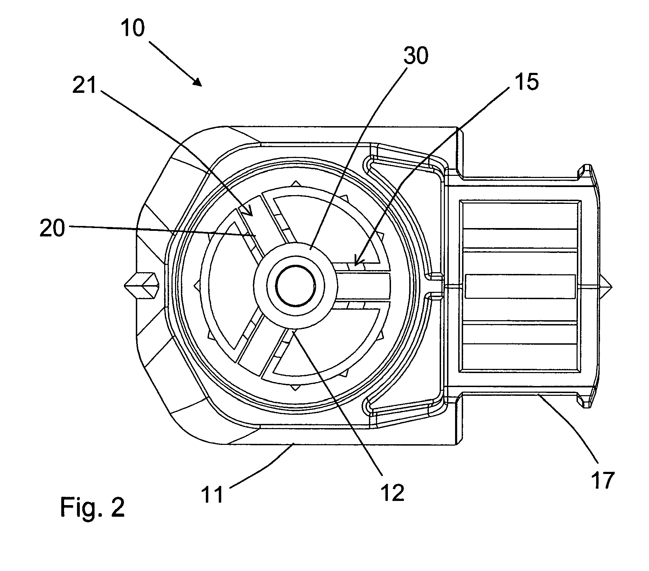

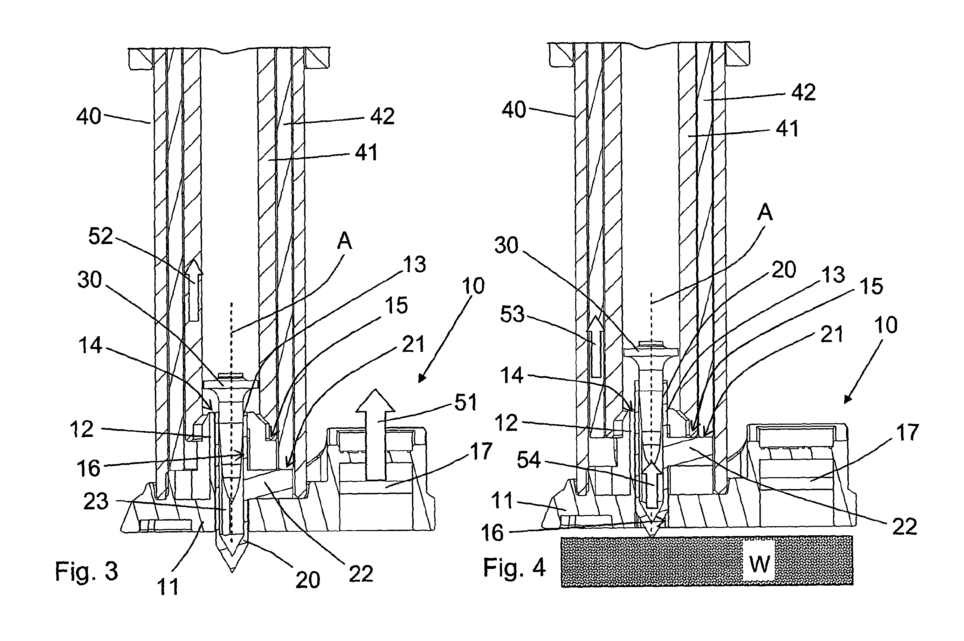

In den Fig. 1 bis 4 ist ein als Kabelbefestiger bzw. Kabelbinder ausgebildetes erfindungsgemässes Konstruktions-Hilfselement 10 in einer ersten Variante dargestellt. Das Konstruktions-Hilfselement 10 weist ein Basisteil 11 auf, an dem zur Kabelbefestigung seitlich an dem Basisteil eine Bandführung 17 für ein in den Figuren nicht dargestelltes Kabelband angeordnet ist. Von dem Basisteil 11 ragt ein hülsenförmiger Führungsabschnitt 12 ab, der eine von einem Widerlager 14 umgebene Durchtrittsöffnung 13 für ein Befestigungselement 30 aufweist. An dem Führungsabschnitt 12 ist eine Stellkontur 15 angeordnet, über die, wie aus den Figuren 3 und 4 ersichtlich ist, ein erster Anpressfühler 41 an einem Mündungsteil 40 eines Setzgerätes in Richtung des zweiten Pfeils 52 betätigbar ist, wenn das Konstruktions-Hilfselement 10 auf das Mündungsteil 40 in Richtung des ersten Pfeils 51 aufgesteckt wird (siehe Fig. 3). Durch die Betätigung des ersten Anpressfühlers 41 des Setzgerätes wird die Steuerelektronik des Setzgerätes in eine Vor-Setzbereitschaft versetzt.

In dem Führungsabschnitt 12 ist gleichzeitig auch eine Führung 16 für ein als länglicher Hohlstift ausgebildetes Tastelement 20 angeordnet. Das Tastelement 20 weist dabei einen axial verlaufenden Aufnahmeraum 23 auf, in den das Befestigungselement 30 eingesteckt wird und wo es dann reibschlüssig gehalten wird. Das Tastelement 20 verfügt über drei radial vom zentralen Stiftkörper abragende Vorsprünge 22, die in gleichmässigen Abständen zueinander angeordnet sind. An den Vorsprüngen 22 sind jeweils an deren in Aufsteckrichtung auf das Mündungsteil 40 hin liegenden Seiten Stellflächen 21 angeordnet, über die ein zweiter Anpressfühler 42 am Mündungsteil 40 eines Setzgerätes betätigbar ist, wie aus Fig. 4 ersichtlich ist. Wird das Setzgerät mit dem auf dem Mündungsteil 40 aufgesteckten Konstruktions-Hilfselement 10 an ein Werkstück W angedrückt, dann verschiebt sich das Tastelement 20 von seinem aus Fig. 3 ersichtlichen Ausgangszustand in Richtung des dritten Pfeils 53 zum Mündungsteil 40 hin. Die Stellflächen 21 an den Vorsprüngen 22 bewegen dabei die zweite Anpresshülse 42 in Richtung des vierten Pfeils 54 in das Mündungsteil 40 hinein (siehe Fig. 4). Durch diese Betätigung des zweiten Anpressfühlers 42 wird die Steuerelektronik des Setzgerätes in Setzbereitschaft versetzt, so dass nur noch der Auslöseschalter bzw. Triggerschalter des Setzgerätes betätigt werden müsste, um einen Setzvorgang auszulösen.

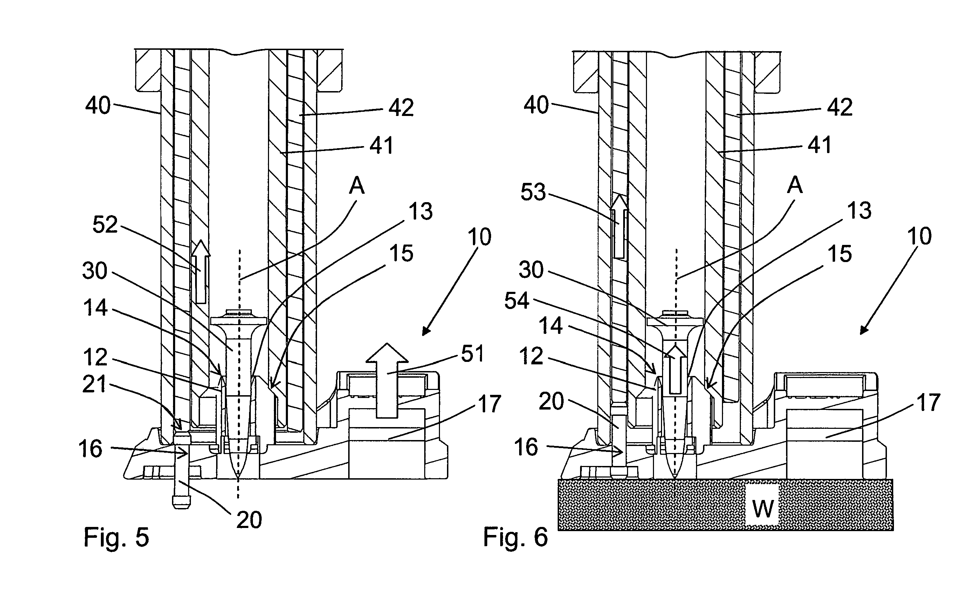

Das in den Figuren 5 und 6 dargestellte Konstruktions-Hilfselement 10 unterscheidet sich im Wesentlichen dadurch von dem in den Figuren 1 bis 4 dargestellten, dass die Stellfläche 21 an einem in Aufsteckrichtung auf das Mündungsteil 40 hin liegenden Ende des als Stift ausgeführten Tastelements 20 liegt. Ausserdem ist die Führung 16 für das Tastelement 20 radial beabstandet zum Führungsabschnitt 12 angeordnet. Die Führung 16 ist hier also zwar parallel zur Befestigungsachse A, aber nicht koaxial zu dieser angeordnet.

Wird das Konstruktions-Hilfselement 10 in Richtung des ersten Pfeils 51 auf ein Mündungsteil 40 eines Setzgerätes aufgesteckt, dann wird über die Stellkontur 15 an dem Führungsabschnitt 12, wie aus Figuren 5 ersichtlich ist, der erste Anpressfühler 41 an dem Mündungsteil 40 in Richtung des zweiten Pfeils 52 betätigt. Durch die Betätigung des ersten Anpressfühlers 41 des Setzgerätes wird die Steuerelektronik des Setzgerätes in eine Vor-Setzbereitschaft versetzt.

Wird das Setzgerät mit dem auf dem Mündungsteil 40 aufgesteckten Konstruktions-Hilfselement 10 an ein Werkstück W angedrückt, wie aus Fig. 6 ersichtlich ist, dann verschiebt sich das Tastelement 20 von seinem aus Fig. 5 ersichtlichen Ausgangszustand in Richtung des dritten Pfeils 53 zum Mündungsteil 40 hin. Die Stellflächen 21 an den Vorsprüngen 22 bewegen dabei die zweite Anpresshülse 42 in Richtung des vierten Pfeils 54 in das Mündungsteil 40 hinein. Durch diese Betätigung des zweiten Anpressfühlers 42 wird die Steuerelektronik des Setzgerätes in Setzbereitschaft versetzt, so dass nur noch der Auslöseschalter bzw. Triggerschalter des Setzgerätes betätigt werden müsste, um einen Setzvorgang auszulösen.

Es versteht sich, dass das Bau-Hilfselement 10 ebenfalls auch als Schalungsanschlag, Abstandhalter, Bewehrungshalter, Rohrschelle, Halteelement, Winkelelement, Deckenabhänger oder dgl. ausgebildet sein kann.

## Patentansprüche

1. Konstruktions-Hilfselement mit einem von einem Basisteil (11) abragenden Führungsabschnitt (12) für ein Befestigungselement (30), der eine Durchtrittsöffnung (13) und ein Widerlager (14) für das Befestigungselement (30) aufweist, wobei die Durchtrittsöffnung (13) eine Befestigungsachse (A) definiert,
**dadurch gekennzeichnet,**
**dass** am Basisteil (11) ein im Führungsabschnitt versetzbar geführtes Tastelement (20) vorgesehen ist, das wenigstens eine von der Durchtrittsöffnung (13) radial beabstandete und entlang der Befestigungsachse (A) versetzbare Stellfläche (21) für einen Anpressfühler (42) eines Setzgerätes aufweist, wobei das Tastelement (20) im Ausgangszustand über die dem Führungsabschnitt (12) abgewandte Seite des Basisteils (11) vorsteht.

2. Konstruktions-Hilfselement nach Anspruch 1, **dadurch gekennzeichnet, dass** das Tastelement (20) als länglicher Stift ausgebildet ist, der radial beabstandet zum Führungsabschnitt (12) in einer separaten Führung (16) angeordnet ist und an dessen einem Stiftende die Stellfläche (21) angeordnet ist.

3. Konstruktions-Hilfselement nach Anspruch 1 oder 2, **dadurch gekennzeichnet, dass** das Tastelement (20) unverlierbar in der Führung (16) gehalten ist.

4. Konstruktions-Hilfselement nach Anspruch 1 oder 3, **dadurch gekennzeichnet, dass** das Tastelement (20) als länglicher Hohlstift ausgebildet ist, der einen Aufnahmeraum (23) für das Befestigungselement (30) aufweist, wobei die Führung (16) für das Tastelement (20) koaxial zu der Befestigungsachse (A) angeordnet ist.

5. Konstruktions-Hilfselement nach Anspruch 1, 3 oder 4, **dadurch gekennzeichnet, dass** an dem Tastelement (20) wenigstens ein seitlich abragender Vorsprung (22) angeordnet ist, an dem die Stellfläche (21) angeordnet ist.

6. Konstruktions-Hilfselement nach einem der Ansprüche 1 und 3 bis 5, **dadurch gekennzeichnet, dass** mehrere Vorsprünge (22) in regelmässigen Abständen seitlich abragend am Tastelement (20) angeordnet sind.

## Claims

1. Fixing element with a guide section (12) projecting from a basic part (11) for a fastening element (30), which has an opening (13) and an abutment (14) for the fastening element (30), in which the opening (13) defines a fastening axis (A),
**characterised in that**
a feeler element (20) is provided on the basic part (11), which is guided in the guide section so that it can move, which has at least one flat (21) radially at a distance from the opening (13), which may be moved along the fastening axis (A), for a contact detecting element (42) of a setting tool, in which the feeler element (20) projects over the side of the basic part (11) turned away from the guide section (12) in the initial state.

2. Fixing element according to claim 1, **characterised in that** the feeler element (20) is made as an oblong pin, which is arranged in a separate guide (16) radially at a distance from the guide section (12), at one end of which pin a flat (21) is arranged.

3. Fixing element according to claim 1 or 2, **characterised in that** the feeler element (20) is held in the guide (16) so that it cannot be lost.

4. Fixing element according to claim 1 or 3, **characterised in that** the feeler element (20) is made as an oblong hollow pin, which has a housing area (23) for the fastening element (30), in which the guide (16) for the feeler element (20) is arranged coaxially to the fastening axis (A).

5. Fixing element according to claim 1, 3 or 4, **characterised in that** at least one projection (22) projecting to the side is arranged on the feeler element (20), on which the flat (21) is arranged.

6. Fixing element according to one of claims 1 and 3 to 5, **characterised in that** several projections (22) projecting to the side are arranged at regular intervals on the feeler element (20).

## Revendications

1. Elément d'aide à la construction comportant une partie de guidage (12) faisant saillie à partir d'un élément de base (11) pour un élément de fixation (30), comportant une ouverture traversante (13) et une butée (14) pour l'élément de fixation (30), dans lequel l'ouverture traversante (13) définit un axe de fixation (A),
**caractérisé en ce qu'**un élément palpeur (20) guidé de manière mobile dans la partie de guidage est prévu sur l'élément de base (11), lequel élément palpeur comporte au moins une surface de placement (21) pour un palpeur à pression (42) d'un appareil de pose, ladite surface étant radialement distante de l'ouverture traversante (13) et déplacée le long de l'axe de fixation (A), dans lequel l'élément palpeur (20), à l'état initial, fait saillie au-delà du côté opposé à la partie de guidage (12) de l'élément de base (11).

2. Elément d'aide à la construction selon la revendication 1, **caractérisé en ce que** l'élément palpeur (20) est configuré sous la forme d'une broche allongée qui est agencée radialement espacée de la partie de guidage (12) dans un guide séparé (16), et la surface de placement (21) est réalisée sur une extrémité de la broche.

3. Elément d'aide à la construction selon la revendication 1 ou 2, **caractérisé en ce que** l'élément palpeur (20) est maintenu dans le guide (16) de manière imperdable.

4. Elément d'aide à la construction selon la revendication 1 ou 3, **caractérisé en ce que** l'élément palpeur (20) est configuré sous la forme d'une broche creuse allongée comportant un espace de réception (23) pour l'élément de fixation (30), le guide (16) pour l'élément palpeur (20) étant agencé coaxialement à l'axe de fixation (A).

5. Elément d'aide à la construction selon la revendication 1, 3 ou 4, **caractérisé en ce que** l'élément palpeur (20) a au moins une saillie faisant latéralement saillie (22) sur laquelle est réalisée la surface de placement (21).

6. Elément d'aide à la construction selon l'une quelconque des revendications 1 et 3 à 5, **caractérisé en ce que** plusieurs saillies (22) s'étendant latéralement, uniformément espacées les unes des autres, sont agencées sur l'élément palpeur (20).
